# EUROPEAN PATENT APPLICATION

(11) **EP 2 514 970 A1**
(43) Date of publication of application: **24.10.2012**
(21) Application number: 10837362.2
(22) Date of filing: 28.10.2010
(51) Int. Cl.: F03D 11/02, F03D 1/06, F16H 3/54

(54) **TRANSMISSION FOR WIND POWER GENERATION EQUIPMENT, AND WIND POWER GENERATION DEVICE**

(30) Priority: 15.12.2009 JP 2009284254
(71) Applicant: Mitsubishi Heavy Industries, Ltd., Tokyo 108-8215 (JP)
(72) Inventor: TAKEUCHI, Hiroaki, Tokyo 108-8215 (JP); NISHIDA, Hideaki, Tokyo 108-8215 (JP); SHODA, Katsuhiko, Tokyo 108-8215 (JP); YUGE, Atsushi, Tokyo 108-8215 (JP)
(74) Representative: Intès, Didier Gérard André
(86) International application number: PCT/JP2010/069141
(87) International publication number: WO 2011/074332

(57) **Abstract**

A wind-turbine-generator-system transmission and a wind turbine generator that can ensure the strength of a bearing and can also minimize seizing and abrasion are provided. In a wind-turbine-generator-system transmission (5) having a sun gear (109), a planetary gear (107) that meshes with the sun gear (109) and rotates around the sun gear (109), and an inner tooth (108) that meshes with the planetary gear (107), the transmission (5) includes a carrier (102) that rotates the planetary gear (107) around the sun gear (109); a planetary pin (103) that is disposed in the carrier (102) and transmits rotation of the carrier (102) to the planetary gear (107); a cylindrical sleeve (104) disposed around a periphery of the planetary pin (103); and a slide bearing (105) that is disposed between the sleeve (104) and the planetary gear (107) and supports the planetary gear (107) in a rotatable manner about the planetary pin (103).

## Description

### Technical Field

The present invention relates to wind-turbine-generator-system transmissions and wind turbine generators.

### {Background Art}

Generally, when a rotational force of blades is to be transmitted to a generator in a wind turbine generator, a transmission, such as a transmission that uses a planetary gear, provided therein converts the rotational force to a rotational speed appropriate for generating power.
Transmissions that use planetary gears are known to have high output conversion efficiency as compared with transmissions of other types (for example, see Patent Literature 1).

A planetary gear is mainly provided with a sun gear, a planetary gear, inner teeth, and the like, and the planetary gear is supported in a resolvable and rotatable manner around the sun gear by a carrier and a planetary pin connected to a main shaft that receives the rotational force from the blades. For this reason, a bearing structure, such as a roller bearing or a slide bearing, is provided between the planetary gear and the planetary pin.

### {Citation List}

### {Patent Literature}

{PTL 1} The Publication of Japanese Patent No. 3649444 {Summary of Invention}

### {Technical Problem}

A slide bearing is advantageous in that it has a longer life span than a roller bearing and can allow for noise reduction and lower manufacturing costs.
However, when using a slide bearing, there is a problem in that it is difficult to both minimize seizing and abrasion of the slide bearing and ensure the strength of the carrier and the planetary pin at the same time.

Specifically, by increasing the diameter of the planetary pin, seizing and abrasion of the slide bearing can be minimized since the contact pressure between the planetary pin and the slide bearing becomes smaller. On the other hand, the stress on the mating surface between the planetary pin and the carrier increases, which is a problem in terms of reduced strength of the planetary pin and the carrier.
In contrast, by reducing the diameter of the planetary pin, the strength of the planetary pin and the carrier can be increased since the stress on the mating surface between the planetary pin and the carrier becomes smaller. On the other hand, the contact area between the planetary pin and the slide bearing increases, which is a problem in that there is a higher possibility of the slide bearing becoming seized or abraded.

The present invention has been made to solve the aforementioned problems, and an object thereof is to provide a wind-turbine-generator-system transmission and a wind turbine generator that can ensure the strength of a bearing and can also minimize seizing and abrasion.

### {Solution to Problem}

In order to achieve the aforementioned object, the present invention provides the following solutions.
In a wind-turbine-generator-system transmission according to a first aspect of the present invention having a sun gear, a planetary gear that meshes with the sun gear and rotates around the sun gear, and an inner tooth that meshes with the planetary gear, the transmission includes a carrier that rotates the planetary gear around the sun gear; a planetary pin that is disposed in the carrier and transmits rotation of the carrier to the planetary gear; a cylindrical sleeve disposed around a periphery of the planetary pin; and a slide bearing that is disposed between the sleeve and the planetary gear and supports the planetary gear in a rotatable manner about the planetary pin.

With the first aspect, since the planetary gear is rotatably supported between the sleeve and the slide bearing in a state where the planetary pin is disposed in the carrier and the cylindrical sleeve is disposed around the periphery of the planetary pin, the strength of the bearing in the wind-turbine-generator-system transmission can be ensured, and seizing and abrasion can be minimized.

Specifically, by disposing the sleeve between the planetary pin and the slide bearing, the contact area related to the slide bearing (i.e., the contact area between the sleeve and the slide bearing) is increased so that the contact pressure is reduced. As a result, seizing and abrasion of the slide bearing can be minimized.
On the other hand, since the diameter of the planetary pin itself disposed in the carrier is not increased, an increase in stress on the mating surface or the like between the planetary pin and the carrier is minimized. Therefore, reduction of strength in the planetary pin and the carrier can be minimized.

In the first aspect, it is desirable that the carrier be formed of two plate members that face each other, the planetary pin be disposed so as to extend through the plate members, and the planetary gear and the sleeve be disposed between the two plate members.

With the first aspect, the diameter of parts of the planetary pin and the sleeve that are in contact with the slide bearing can be increased so that the contact pressure on the slide bearing can be reduced.
On the other hand, the diameter of the part of the planetary pin that is fitted in the carrier remains small so that an increase in stress on the mating surface or the like between the planetary pin and the carrier can be minimized.

In the first aspect, it is desirable that a flow channel that supplies a lubricant between the slide bearing and the sleeve be formed in the planetary pin and the sleeve.

With the first aspect, a lubrication layer made of the lubricant, such as lubricating oil, is formed between the slide bearing and the sleeve. Therefore, seizing and abrasion between the slide bearing and the sleeve can be minimized.

In the above-described configuration, it is desirable that a reservoir that stores the lubricant be formed between the sleeve and the slide bearing.

With the above-described configuration, the lubricant stored in the reservoir is supplied between the sleeve and the slide bearing. Therefore, a lubrication layer can be readily formed between the sleeve and the slide bearing, as compared with when the lubricant is simply supplied from the flow channel, whereby seizing and abrasion between the slide bearing and the sleeve can be more reliably minimized.

In the first aspect, it is desirable that the planetary pin be provided with a hole that extends from an end surface of the planetary pin toward an interior of the planetary pin.

With the first aspect, by using the hole to adjust the temperature of the planetary pin, temperature adjustment can be readily performed, as compared with when not using the hole.
For example, when securing and disposing the planetary pin in the carrier by cooling and fitting, it is necessary to cool the planetary pin. In this case, by using the hole provided in the planetary pin, the planetary pin can be readily secured and disposed in the carrier.
Furthermore, since the planetary pin alone can be cooled, the planetary pin can be readily removed from the carrier.

In the first aspect, it is desirable that a thrust-receiving section be provided between the carrier and at least one of the slide bearing and the planetary gear.

With the first aspect, direct contact between the carrier and the slide bearing and also between the carrier and the planetary gear does not occur. Therefore, the occurrence of seizing between the carrier and the slide bearing as well as between the carrier and the planetary gear can be prevented, and the occurrence of failures caused by abrasion dust produced by contact therebetween can also be prevented.

A wind turbine generator according to a second aspect of the present invention includes a rotor blade that rotates around a main shaft by receiving wind; the wind-turbine-generator-system transmission according to the first aspect that increases or decreases the rotation speed of the main shaft; and a generator unit that generates power by being rotationally driven by the wind-turbine-generator-system transmission.

With the second aspect, since the wind-turbine-generator-system transmission according to the first aspect is provided, the strength of the bearing in the wind turbine generator can be ensured, as well as minimizing seizing and abrasion.

### {Advantageous Effects of Invention}

The wind-turbine-generator-system transmission and the wind turbine generator according to the present invention are advantageous in that, since the planetary gear is rotatably supported between the sleeve and the slide bearing in a state where the planetary pin is disposed in the carrier and the cylindrical sleeve is disposed around the periphery of the planetary pin, the strength of the bearing in the wind-turbine-generator-system transmission and in the wind turbine generator can be ensured, and seizing and abrasion can be minimized.

### {Brief Description of Drawings}

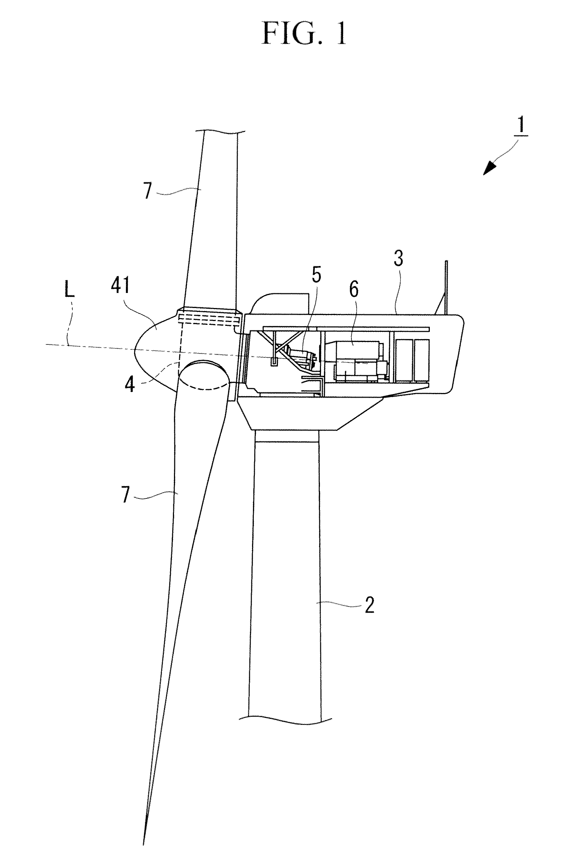

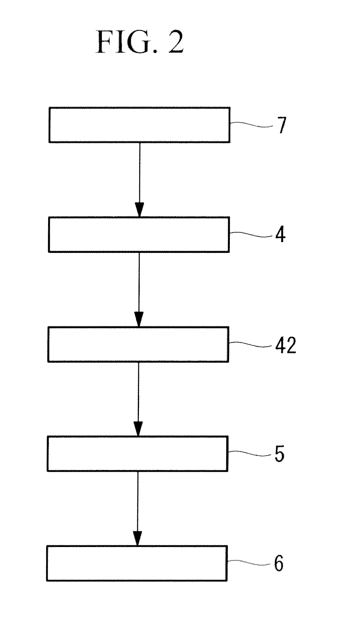

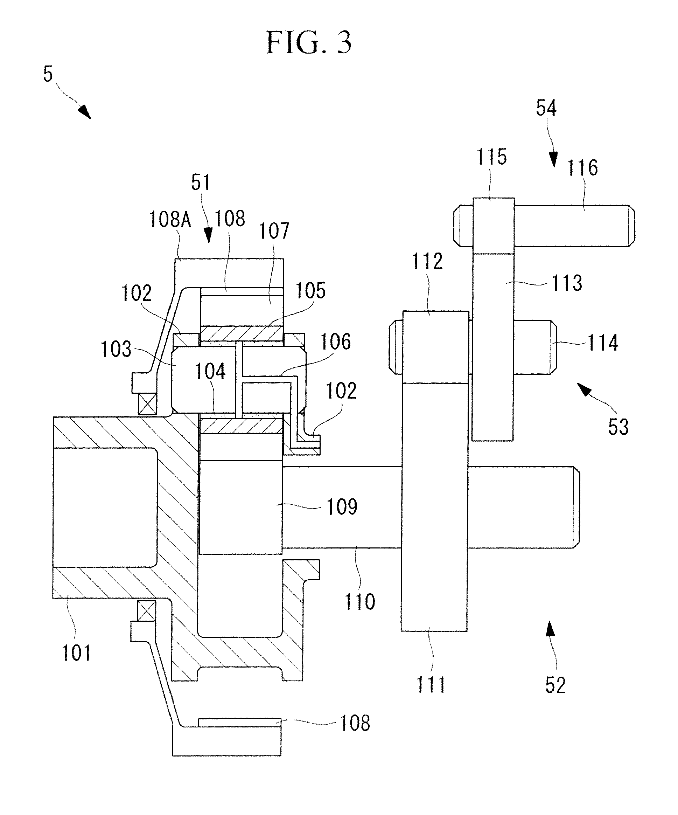

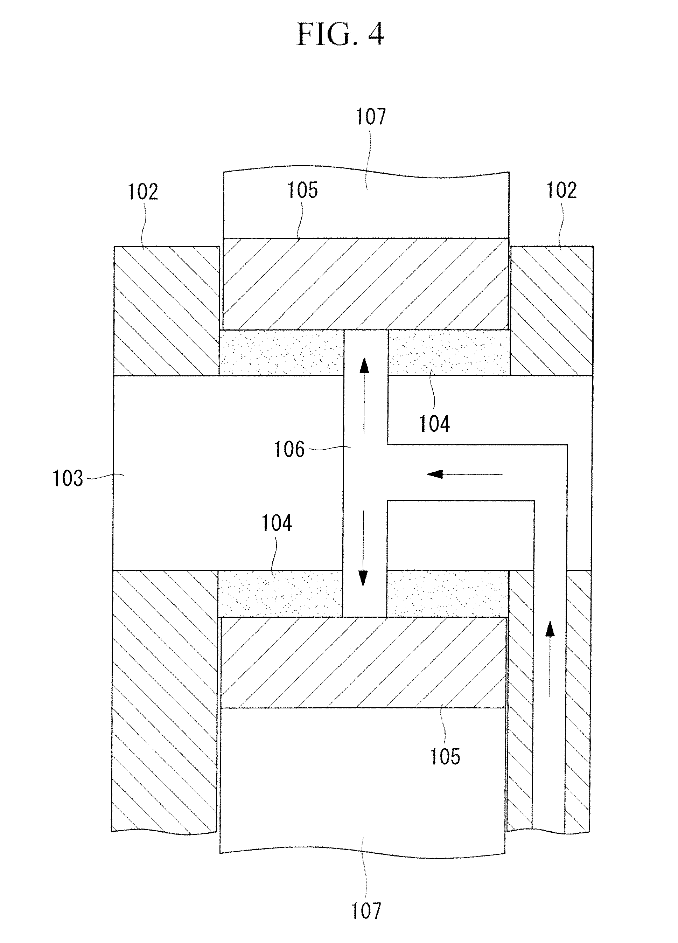

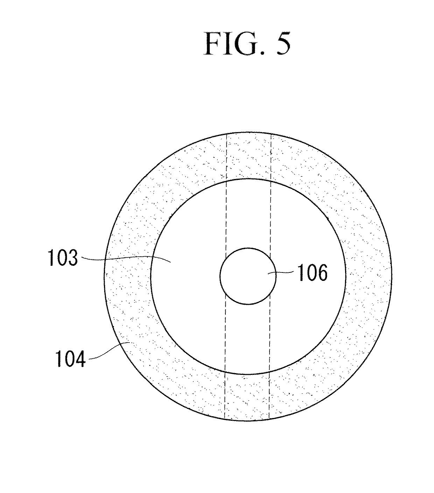

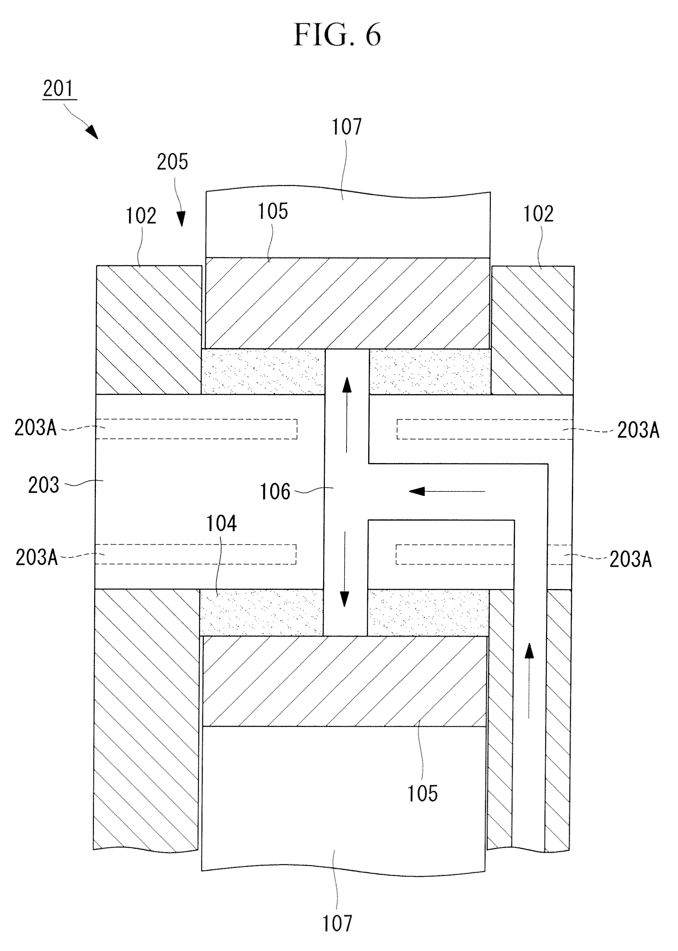

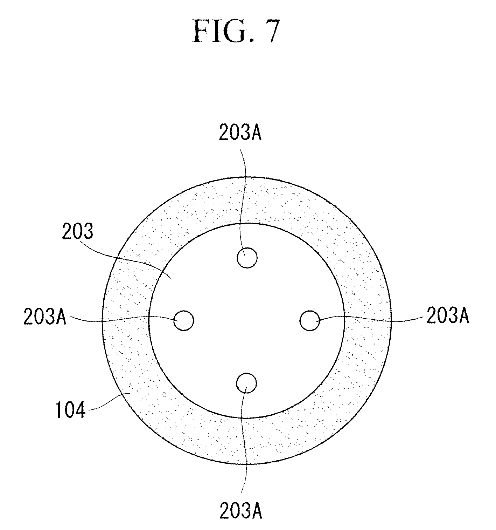

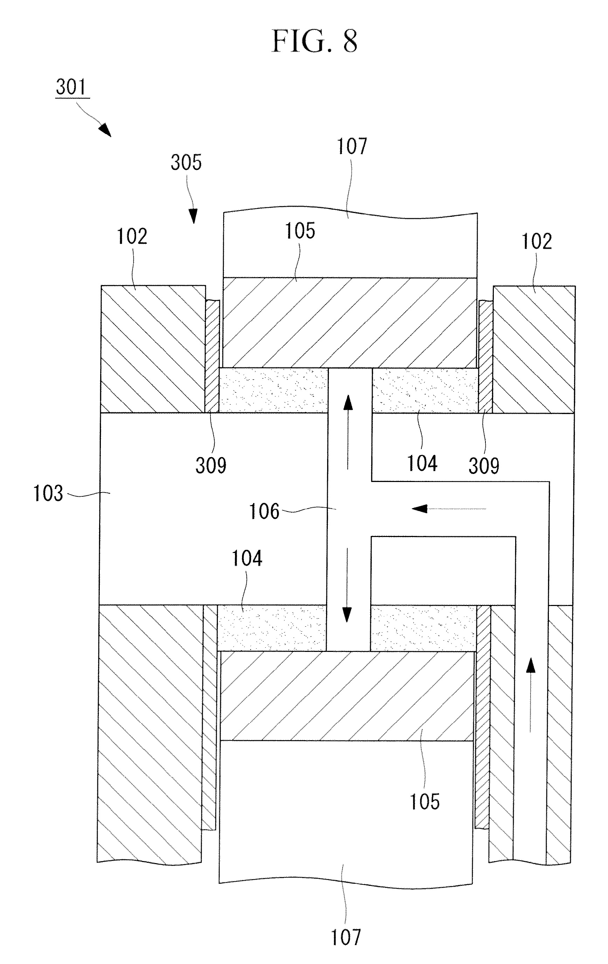

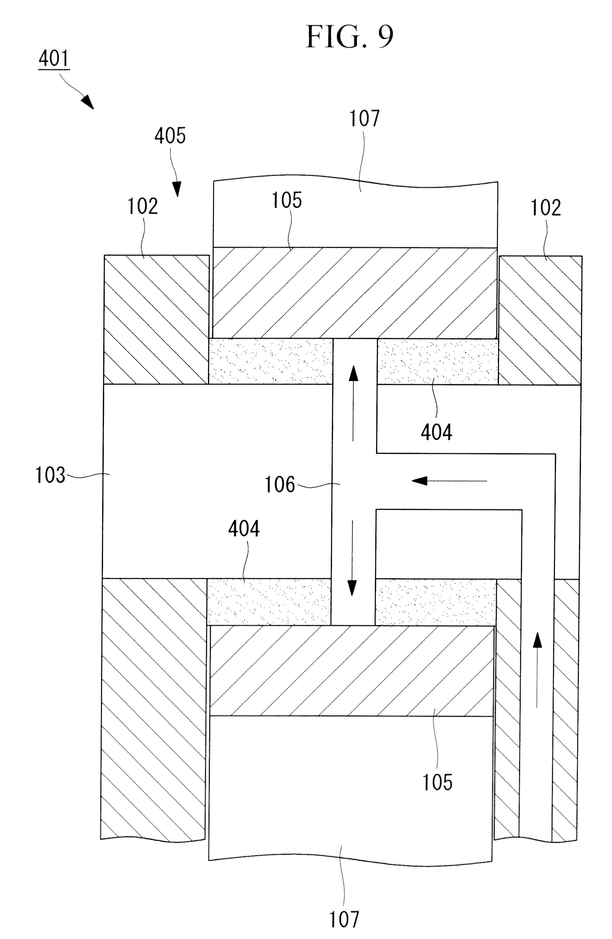

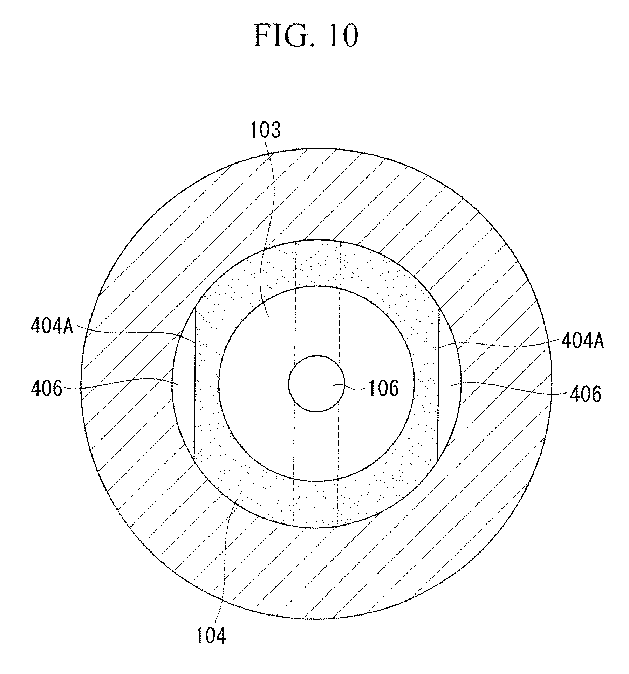

{Fig. 1} Fig. 1 is a schematic diagram explaining the overall configuration of a wind turbine generator according to a first embodiment of the present invention.
{Fig. 2} Fig. 2 is a block diagram explaining a transmission path of a rotational driving force in the wind turbine generator in Fig. 1.
{Fig. 3} Fig. 3 is a schematic diagram explaining the configuration of a gear box in Fig. 1.
{Fig. 4} Fig. 4 is a partially enlarged diagram explaining the configuration of a planetary gear and its surrounding area in the gear box in Fig. 3.
{Fig. 5} Fig. 5 is a schematic diagram explaining the configuration of a planetary pin and a sleeve in Fig. 4.
{Fig. 6} Fig. 6 is a partially enlarged diagram explaining the configuration of a planetary gear unit in a wind turbine generator system according to a second embodiment of the present invention.
{Fig. 7} Fig. 7 is a schematic diagram explaining the configuration of a planetary pin in Fig. 6.
{Fig. 8} Fig. 8 is a partially enlarged diagram explaining the configuration of a planetary gear unit in a wind turbine generator system according to a third embodiment of the present invention.
{Fig. 9} Fig. 9 is a partially enlarged diagram explaining the configuration of a planetary gear unit in a wind turbine generator system according to a fourth embodiment of the present invention.
{Fig. 10} Fig. 10 is a schematic diagram explaining the configuration of a planetary pin in Fig. 9.

### {Description of Embodiments}

### {First Embodiment}

A wind turbine generator according to a first embodiment of the present invention will be described bellow with reference to Figs. 1 to 5.
Fig. 1 is a schematic diagram explaining the overall configuration of the wind turbine generator according to this embodiment. Fig. 2 is a block diagram explaining a transmission path of a rotational driving force in the wind turbine generator in Fig. 1.

As shown in Figs. 1 and 2, a wind turbine generator system (wind turbine generator) 1 is a so-called upwind-type wind turbine generator system and is configured to perform wind power generation by receiving wind.
The wind turbine generator system 1 is provided with a tower 2, a nacelle 3, a hub 4, a plurality of rotor blades 7, a gear box (wind-turbine-generator-system transmission) 5, and a generator (generator unit) 6.

The tower 2 has a columnar structure extending upward (upward in Fig. 1) from a foundation and is constituted of a plurality of units that are connected in the vertical direction. The nacelle 3 is provided at the uppermost part of the tower 2. When the tower 2 is constituted of the plurality of units, the nacelle 3 is set on top of the uppermost unit.

The nacelle 3 rotatably supports the hub 4 and accommodates therein the generator 6 that performs power generation in accordance with the rotation of the hub 4.
The nacelle 3 is provided with, for example, an opening through which a main shaft 42 that transmits a rotational driving force of the hub 4 extends, as well as an entrance door used for maintenance.

The multiple rotor blades 7 extending radially about a rotation axis L of the hub 4 are attached thereto at equal intervals in the circumferential direction. The hub 4 is provided in a rotatable manner around the rotation axis L relative to the nacelle 3, and the periphery thereof is covered by a head capsule 41.

The rotor blades 7 are attached in a radiating pattern around the rotation axis L of the hub 4.
Although this embodiment is described as being applied to an example provided with three rotor blades 7, the number of rotor blades 7 is not limited to three and may alternatively be two or more than three; it is not particularly limited.

Fig. 3 is a schematic diagram explaining the configuration of the gear box in Fig. 1. Fig. 4 is a partially enlarged diagram explaining the configuration of a planetary gear and its surrounding area in the gear box in Fig. 3. Fig. 5 is a schematic diagram explaining the configuration of a planetary pin and a sleeve in Fig. 4.
The gear box 5 is configured to increase the speed of the rotational driving force transmitted by the main shaft 42 to a rotation speed appropriate for driving the generator 6.
As shown in Fig. 3, the gear box 5 is mainly provided with a planetary gear unit 51, a low-speed gear unit 52, a mid-speed gear unit 53, and a high-speed gear unit 54.

The planetary gear unit 51 is configured to initially increase the speed of the rotational driving force transmitted by the main shaft 42 and input the rotational driving force to the low-speed gear unit 52.
As shown in Figs. 3 and 4, the planetary gear unit 51 is mainly provided with an input shaft 101, a carrier 102, a planetary pin 103, a sleeve 104, a slide bearing 105, a lubricating-oil supply channel (flow channel) 106, a planetary gear 107, inner teeth 108, a sun gear 109, and an output shaft 110.

The input shaft 101 is a part that receives the rotational driving force from the main shaft 42 and is configured to transmit the rotational driving force to the carrier 102. The input shaft 101 is a columnar or cylindrical member and is rotatably supported around a central axis. Moreover, the carrier 102 is provided at an end of the input shaft 101 adjacent to the sun gear 109 (i.e., the right end thereof in Fig. 3).

As shown in Figs. 3 and 4, the carrier 102 is a part that receives the rotational driving force from the input shaft 101 and is configured to rotate (revolve) the planetary gear 107 around the sun gear 109. The carrier 102 is constituted of a plate member extending radially outward in the form of a flange from the end of the input shaft 101, a ring-shaped plate member disposed facing the aforementioned plate member, and a pillar member connecting the two plate members.
The planetary gear 107 is disposed between the two plate members of the carrier 102.

The planetary pin 103 is configured to attach the sleeve 104, the slide bearing 105, and the planetary gear 107 to the carrier 102 and support the planetary gear 107 in a rotatable manner about the planetary pin 103.
The planetary pin 103 is a columnar member and is fitted in a through-hole formed in the two plate members of the carrier 102.

The sleeve 104 is configured to attach the planetary pin 103, the slide bearing 105, and the planetary gear 107 to the carrier 102 and support the planetary gear 107 in a rotatable manner about the planetary pin 103.
The sleeve 104 is a cylindrical member and is disposed between the two plate members of the carrier 102. Furthermore, the sleeve 104 has the planetary pin fitted therein and is composed of a material having the same coefficient of linear expansion as that of the planetary pin 103, for example, the same material as that used for the planetary pin 103.
Accordingly, even when the temperature of the planetary pin 103 and the sleeve 104 changes, overstress and gap formation between the planetary pin 103 and the sleeve 104 can be prevented.

The slide bearing 105 is configured to attach the planetary pin 103, the sleeve 104, and the planetary gear 107 to the carrier 102 and support the planetary gear 107 in a rotatable manner about the planetary pin 103.
The slide bearing 105 is a cylindrical member and is attached to the planetary gear 107. Therefore, a contact surface between the sleeve 104 and the slide bearing 105 acts as a sliding surface.

As shown in Figs. 3 to 5, the lubricating-oil supply channel 106 is a flow channel for supplying lubricating oil to the contact surface between the sleeve 104 and the slide bearing 105. The lubricating-oil supply channel 106 extends from the carrier 102 to the interior of the planetary pin 103 and diverges into two flow channels inside the planetary pin 103 before the two flow channels open to the outer periphery of the sleeve 104. One of the two openings of the lubricating-oil supply channel 106 is provided in a load surface on the outer periphery of the sleeve 104, whereas the other opening is provided in a counter load surface thereof.
In this case, the term "load surface" is a surface that receives load when the rotational driving force is transmitted, and is the lower surface in Figs. 3 and 4. The term "counter load surface" is a surface opposite the load surface and is the upper surface.

By providing one of the openings of the lubricating-oil supply channel 106 in the load surface in this manner, the lubricating oil can be supplied to a part where the contact pressure becomes high on the outer periphery of the sleeve 104 when the wind turbine generator system 1 performs power generation, that is, when the rotational driving force is transmitted to the generator 6.
On the other hand, by providing the other opening of the lubricating-oil supply channel 106 in the counter load surface, the lubricating oil can be supplied to a part where the contact pressure becomes high, that is, the counter load surface, when, for example, a braking force is applied for reducing the rotation speed of the wind turbine due to an increasing wind speed.

The planetary gear 107 meshes with the sun gear 109 and the inner teeth 108 so as to constitute a planetary speed-reducing mechanism. The planetary gear 107 is rotatably supported by the carrier 102 via the planetary pin 103, the sleeve 104, and the slide bearing 105, and is made by forming teeth around the outer periphery of a cylinder supported in a revolvable manner relative to the sun gear 109.
Although this embodiment is described as being applied to an example in which three planetary gears 107 are arranged at equal intervals in the circumferential direction, the number of planetary gears 107 is not particularly limited.

The inner teeth 108 mesh with the planetary gear 107 so as to constitute the planetary speed-reducing mechanism. The inner teeth 108 are formed at a position facing the planetary gear 107 within the inner surface of a casing 108A that covers the carrier 102, the planetary gear 107, the sun gear 109, and the like. Specifically, the inner teeth 108 are configured to mesh with the planetary gear 107 at an outer side thereof in the radial direction about the input shaft 101.

The sun gear 109 meshes with the planetary gear 107 so as to constitute the planetary speed-reducing mechanism. The sun gear 109 is formed of a column or a cylinder having teeth formed on the outer periphery thereof, and is formed coaxially with the output shaft 110. The sun gear 109 and the output shaft 110 are disposed substantially coaxially with the input shaft 101 and are configured to mesh with the planetary gear 107 at an inner side thereof in the radial direction around the input shaft 101.

The output shaft 110 is configured to transmit the rotational driving force, whose rotation speed has been increased by the planetary gear unit 51, to the low-speed gear unit 52. The output shaft 110 is disposed coaxially with the sun gear 109 and is also disposed substantially coaxially with the input shaft 101.

The low-speed gear unit 52 is configured to further increase the speed of the rotational driving force, whose rotation speed has been increased by the planetary gear unit 51, and input the rotational driving force to the mid-speed gear unit 53. The low-speed gear unit 52 is mainly provided with a low-speed clear 111. The low-speed gear 111 meshes with a small mid-speed gear 112 and has a diameter larger than that of the small mid-speed gear 112. Moreover, the low-speed gear 111 is provided coaxially with the output shaft 110 of the planetary gear unit 51.

The mid-speed gear unit 53 is configured to further increase the speed of the rotational driving force, whose rotation speed has been increased by the low-speed gear unit 52, and input the rotational driving force to the high-speed gear unit 54. The mid-speed gear unit 53 is mainly provided with the small mid-speed gear 112 and a large mid-speed gear 113.
The small mid-speed gear 112 meshes with the low-speed gear 111 and has a diameter smaller than that of the low-speed gear 111. On the other hand, the large mid-speed gear 113 meshes with a high-speed gear 115 and has a diameter larger than that of the high-speed gear 115.
Furthermore, the small mid-speed gear 112 and the large mid-speed gear 113 are provided coaxially with a mid-speed shaft 114.

The high-speed gear unit 54 is configured to further increase the speed of the rotational driving force, whose rotation speed has been increased by the mid-speed gear unit 53, and input the rotational driving force to the generator 6. The high-speed gear unit 54 is mainly provided with the high-speed gear 115.
The high-speed gear 115 meshes with the large mid-speed gear 113 and has a diameter smaller than that of the large mid-speed gear. The high-speed gear 115 is provided coaxially with a high-speed shaft 116 that transmits the rotational driving force to the generator 6.

The generator 6 is configured to generate power by being rotationally driven by the rotation of the hub 4 transmitted via the main shaft 42 and the gear box 5.

Next, power generation performed in the wind turbine generator system 1 having the above-described configuration will be described with reference to Figs. 1 to 3.
The rotor blades 7 of the wind turbine generator system 1 rotate around the hub 4 by receiving wind so as to generate a rotational driving force, and rotationally driven the hub 4 and the main shaft 42 connected to the hub 4.

The rotational driving force is input to the input shaft 101 of the gear box 5 from the main shaft 42, and the input shaft 101 and the carrier 102 are rotated around the central axis by the rotational driving force.
When the carrier 102 rotates, the planetary gear 107 is rotationally driven around the sun gear 109 via the planetary pin 103, the sleeve 104, and the slide bearing 105. At this time, because the planetary gear 107 is meshed with the inner teeth 108 and the sun gear 109, the planetary gear 107 is also rotationally driven about the planetary pin 103.
Consequently, the rotation of the input shaft 101 is increased in speed and is transmitted to the sun gear 109 and the output shaft 110.

The rotation of the output shaft 110 is transmitted to the small mid-speed gear 112 of the mid-speed gear unit 53 from the low-speed gear 111 of the low-speed gear unit 52 and is further increased in speed. The rotation of the small mid-speed gear 112 is transmitted to the high-speed gear 115 of the high-speed gear unit 54 from the large mid-speed gear 113 via the mid-speed shaft 114, and is increased in speed to a speed appropriate for rotationally driving the generator 6.
The rotation of the high-speed gear 115 is transmitted to the generator 6 via the high-speed shaft 116 so as to rotationally derive the generator 6, whereby power is generated.

Next, an operation related to lubrication for the planetary gear 107, which characterizes this embodiment, will be described with reference to Figs. 3 and 4.
The lubricating oil related to the rotation of the planetary gear 107 is supplied between the sleeve 104 and the slide bearing 105 via the lubricating-oil supply channel 106. In detail, the lubricating oil supplied to the lubricating-oil supply channel 106 through an opening provided in the carrier 102 flows inside the carrier 102 and the planetary pin 103 and subsequently diverges in two directions before flowing outward through the openings provided in the load surface and the counter load surface on the outer periphery of the sleeve 104.
Consequently, a lubrication layer made of the lubricating oil is formed between the sleeve 104 secured to the carrier 102 via the planetary pin 103 and the slide bearing 105 secured to the planetary gear 107, whereby the planetary gear 107 is supported in a rotatable manner about the planetary pin 103.

With the above-described configuration, since the planetary gear 107 is rotatably supported between the sleeve 104 and the slide bearing 105 in a state where the planetary pin 103 is disposed in the carrier 102 and the cylindrical sleeve 104 is disposed around the periphery of the planetary pin 103, the strength of the bearing in the gear box 5 of the wind turbine generator system 1 can be ensured, and seizing and abrasion can be minimized.

Specifically, by disposing the sleeve 104 between the planetary pin 103 and the slide bearing 105, the contact area related to the slide bearing 105 (i.e., the contact area between the sleeve 104 and the slide bearing 105) is increased so that contact pressure is reduced. As a result, seizing and abrasion of the slide bearing 105 can be minimized.
On the other hand, since the diameter of the planetary pin 103 itself disposed in the carrier 102 is not increased, an increase in stress on the mating surface or the like between the planetary pin 103 and the carrier 102 is minimized. Therefore, reduction of strength in the planetary pin 103 and the carrier 102 can be minimized.

The diameter of parts of the planetary pin 103 and the sleeve 104 that are in contact with the slide bearing 105 can be increased so that the contact pressure on the slide bearing 105 can be reduced.
On the other hand, the diameter of the part of the planetary pin 103 that is fitted in the carrier 102 remains small so that an increase in stress on the mating surface or the like between the planetary pin 103 and the carrier 102 can be minimized.

By providing the lubricating-oil supply channel 106, the lubrication layer made of the lubricating oil is formed between the slide bearing 105 and the sleeve 104. Therefore, seizing and abrasion between the slide bearing 105 and the sleeve 104 can be minimized.

### {Second Embodiment}

Next, a second embodiment of the present invention will be described with reference to Figs. 6 and 7.
Although the basic configuration of a wind turbine generator system in this embodiment is similar to that in the first embodiment, the configuration of a planetary gear unit differs from that in the first embodiment. Therefore, in this embodiment, only the configuration of the planetary gear unit will be described using Figs. 6 and 7, and descriptions of other components will be omitted.
Fig. 6 is a partially enlarged diagram explaining the configuration of the planetary gear unit in the wind turbine generator system according to this embodiment. Fig. 7 is a schematic diagram explaining the configuration of a planetary pin in Fig. 6.
Components that are the same as those in the first embodiment are given the same reference numerals, and descriptions thereof will be omitted.

As shown in Figs. 6 and 7, a gear box (wind-turbine-generator-system transmission) 205 in a wind turbine generator system (wind turbine generator) 201 in this embodiment is mainly provided with a carrier 102, a planetary pin 203, a sleeve 104, a slide bearing 105, a lubricating-oil supply channel 106, a planetary gear 107, and the like.

Furthermore, the planetary pin 203 is provided with cooling sections (holes) 203A used for cooling the planetary pin 203.
The cooling sections 203A are holes that extend longitudinally (i.e., in the left-right direction in Fig. 6) from end surfaces of the planetary pin 203 and are provided at equal intervals in the circumferential direction. Although the cooling sections 203A are described as being non-through-holes in this embodiment, the cooling sections 203A are not particularly limited thereto and may alternatively be through-holes so long as they are not in communication with the lubricating-oil supply channel 106.
Furthermore, although this embodiment is described as being applied to an example in which four cooling sections 203A are arranged at equal intervals in the circumferential direction, the number of cooling sections 203A is not particularly limited.

Since power generation performed in the wind turbine generator system 201 having the above-described configuration and lubrication for the planetary gear 107 are similar to those in the first embodiment, descriptions thereof will be omitted.
The following description relates to fitting of the planetary pin 203 and removal of the planetary pin 203 into and from the carrier 102, which characterize this embodiment.

The planetary pin 203 is secured in place by being fitted into a through-hole formed in the carrier 102. When performing the fitting process, the planetary pin 203 is cooled so as to reduce the diameter thereof, and is inserted in this state into the aforementioned through-hole. When performing the cooling process, cooling members are inserted into the cooling sections 203A so that the temperature of the entire planetary pin 203 is lowered.
When the temperature of the planetary pin 203 inserted in the through-hole rises to the surrounding temperature, the planetary pin 203 expands in accordance with the coefficient of linear expansion of the material thereof, whereby the fitting process between the planetary pin 203 and the carrier 102 is completed.

On the other hand, for example, when performing maintenance or when checking for a problem in the gear box 205 (e.g. , a problem of unusual noise), the planetary pin 203 is removed from the carrier 102.
Specifically, the cooling members are inserted into the cooling sections 203A so that the temperature of the entire planetary pin 203 alone is lowered. This causes the diameter of the planetary pin 203 to become smaller with decreasing temperature, whereas the diameter of the through-hole of the carrier 102 does not change. Consequently, the planetary pin 203 can be removed from the carrier 102.

With the above-described configuration, since the planetary pin 203 is cooled by using the cooling sections 203A, the cooling process can be performed readily, as compared with when the cooling sections 203A are not used.
When securing and disposing the planetary pin 203 in the carrier 102 by cooling and fitting, the cooling sections 203A provided in the planetary pin 203 are used so that the planetary pin 203 can be readily secured and disposed in the carrier 102.
Furthermore, since the planetary pin 203 alone can be cooled, the planetary pin 203 can be readily removed from the carrier 102.

### {Third Embodiment}

Next, a third embodiment of the present invention will be described with reference to Fig. 8.
Although the basic configuration of a wind turbine generator system in this embodiment is similar to that in the first embodiment, the configuration of a planetary gear unit differs from that in the first embodiment. Therefore, in this embodiment, only the configuration of the planetary gear unit will be described using Fig. 8, and descriptions of other components will be omitted.
Fig. 8 is a partially enlarged diagram explaining the configuration of the planetary gear unit in the wind turbine generator system according to this embodiment.
Components that are the same as those in the first embodiment are given the same reference numerals, and descriptions thereof will be omitted.

As shown in Fig. 8, a gear box (wind-turbine-generator-system transmission) 305 in a wind turbine generator system (wind turbine generator) 301 in this embodiment is mainly provided with a carrier 102, a planetary pin 103, a sleeve 104, a slide bearing 105, a lubricating-oil supply channel 106, a planetary gear 107, thrust-receiving sections 309, and the like.

The thrust-receiving sections 309 are ring-plate-like members disposed between the carrier 102, the sleeve 104, the slide bearing 105, and the planetary gear 107, and are in contact with end surfaces of the planetary gear 107 and the slide bearing 105 that rotate relative to the carrier 102. Moreover, the thrust-receiving sections 309 are composed of a material having lubricity, such as plastic or copper alloy.

Since power generation performed in the wind turbine generator system 301 having the above-described configuration and lubrication for the planetary gear 107 are similar to those in the first embodiment, descriptions thereof will be omitted.
The following description relates to the function of the thrust-receiving sections 309, which characterize this embodiment.

Generally, a force in the longitudinal direction of the planetary pin 103 does not act on the slide bearing 105 and the planetary gear 107 even when a rotational driving force is transmitted in the gear box 305, and the slide bearing 105 and the planetary gear 107 do not come into contact with the carrier 102.
However, when an eternal force in the yaw direction is applied to the wind turbine generator system 301 due to a change in the wind direction, the force in the longitudinal direction of the planetary pin 103 is applied to the slide bearing 105 and the planetary gear 107, causing the slide bearing 105 and the planetary gear 107 to move in the same direction. Then, the slide bearing 105 and the planetary gear 107 come into contact with the thrust-receiving sections 309 and slide between the thrust-receiving sections 309.

With the above-described configuration, direct contact between the carrier 102, which is a casting, and the slide bearing 105 and also between the carrier 102 and the planetary gear 107 does not occur. Therefore, the occurrence of seizing between the carrier 102 and the slide bearing 105 as well as between the carrier 102 and the planetary gear 107 can be prevented, and the occurrence of failures caused by abrasion dust produced by contact therebetween can also be prevented.

### {Fourth Embodiment}

Next, a fourth embodiment of the present invention will be described with reference to Figs. 9 and 10.
Although the basic configuration of a wind turbine generator system in this embodiment is similar to that in the first embodiment, the configuration of a sleeve differs from that in the first embodiment. Therefore, in this embodiment, only the configuration, of the sleeve will be described using Figs. 9 and 10, and descriptions of other components will be omitted.
Fig. 9 is a partially enlarged diagram explaining the configuration of a planetary gear unit in the wind turbine generator system according to this embodiment. Fig. 10 is a schematic diagram explaining the configuration of a planetary pin in Fig. 9.
Components that are the same as those in the first embodiment are given the same reference numerals, and descriptions thereof will be omitted.

As shown in Figs. 9 and 10, a gear box (wind-turbine-generator-system transmission) 405 in a wind turbine generator system (wind turbine generator) 401 in this embodiment is mainly provided with a carrier 102, a planetary pin 103, a sleeve 404, a slide bearing 105, a lubricating-oil supply channel 106, a planetary gear 107, and the like.

Furthermore, cutout sections 404A that form reservoirs 406 for storing lubricating oil between the cutout sections 404A and the slide bearing 105 are formed in the sleeve 404.
Each cutout section 404A is made of a flat surface formed on the outer periphery of the sleeve 404 and is formed at a position distant from each opening of the lubricating-oil supply channel 106 formed in the outer periphery of the sleeve 404 by a phase of about 90°. By forming the cutout sections 404A at these positions, the reservoirs 406 can be formed without having to reduce the area of a load surface and a counter load surface in the sleeve 404.

Since power generation performed in the wind turbine generator system 401 having the above-described configuration and lubrication for the planetary gear 107 are similar to those in the first embodiment, descriptions thereof will be omitted.
The following description relates to the function of the reservoirs 406, which characterize this embodiment.

The reservoirs 406 store a portion of the lubricating oil supplied from the lubricating-oil supply channel 106, and the lubricating oil stored in the reservoirs 406 is supplied between the sleeve 404 and the slide bearing 105. Therefore, a lubrication layer can be readily formed between the sleeve 404 and the slide bearing 105, as compared with when the lubricating oil is simply supplied from the lubricating-oil supply channel 106, whereby seizing and abrasion between the slide bearing 105 and the sleeve 404 can be more reliably minimized.

### {Reference Signs List}

- 1, 201, 301, 401: wind turbine generator system (wind turbine generator)
- 5, 205, 305, 405: gear box (wind-turbine-generator-system transmission)
- 6: generator (generator unit)
- 7: rotor blade
- 101: input shaft
- 102: carrier
- 103, 203: planetary pin
- 104: sleeve
- 105: slide bearing
- 106: lubricating-oil supply channel (flow channel)
- 107: planetary gear
- 108: inner teeth
- 109: sun gear
- 110: output shaft
- 203A: cooling section (hole)
- 406: reservoir

## Claims

1. A wind-turbine-generator-system transmission having a sun gear, a planetary gear that meshes with the sun gear and rotates around the sun gear, and an inner tooth that meshes with the planetary gear, the transmission comprising:
a carrier that rotates the planetary gear around the sun gear;
a planetary pin that is disposed in the carrier and transmits rotation of the carrier to the planetary gear;
a cylindrical sleeve disposed around a periphery of the planetary pin; and
a slide bearing that is disposed between the sleeve and the planetary gear and supports the planetary gear in a rotatable manner about the planetary pin.

2. The wind-turbine-generator-system transmission according to Claim 1, wherein
the carrier is formed of two plate members that face each other,
the planetary pin is disposed so as to extend through the plate members, and
the planetary gear and the sleeve are disposed between the two plate members.

3. The wind-turbine-generator-system transmission according to Claim 1 or 2, wherein a flow channel that supplies a lubricant between the slide bearing and the sleeve is formed in the planetary pin and the sleeve.

4. The wind-turbine-generator-system transmission according to Claim 3, wherein a reservoir that stores the lubricant is formed between the sleeve and the slide bearing.

5. The wind-turbine-generator-system transmission according to any one of Claims 1 to 4, wherein the planetary pin is provided with a hole that extends from an end surface of the planetary pin toward an interior of the planetary pin.

6. The wind-turbine-generator-system transmission according to any one of Claims 1 to 5, wherein a thrust-receiving section is provided between the carrier and at least one of the slide bearing and the planetary gear.

7. A wind turbine generator comprising:
a rotor blade that rotates around again shaft by receiving wind;
the wind-turbine-generator-system transmission according to any one of Claims 1 to 6 that increases or decreases the rotation speed of the main shaft; and
a generator unit that generates power by being rotationally driven by the wind-turbine-generator-system transmission
